# EUROPEAN PATENT SPECIFICATION

(11) **EP 3 112 658 B1**
(45) Date of publication and mention of the grant of the patent: **08.01.2020**
(21) Application number: 15380024.8
(22) Date of filing: 03.07.2015
(51) Int. Cl.: F02M 35/12, F02M 35/10

(54) **MUFFLER ARRANGEMENT**
SCHALLDÄMPFERANORDNUNG
AGENCEMENT DE SILENCIEUX

(43) Date of publication of application: 04.01.2017
(73) Proprietor: MANN+HUMMEL GmbH, 71636 Ludwigsburg (DE)
(72) Inventor: Sánchez, Jorge, 50.010 Zaragoza (ES); Olivan, Juan Jose, 50.008 Zaragoza (ES)

(56) References cited:
- EP-A1- 2 249 020
- EP-A2- 0 435 588
- EP-A2- 1 433 948
- WO-A1-2015/092488
- DE-A1- 19 504 223
- JP-A- H06 159 174
- JP-A- 2004 285 876
- JP-A- 2009 264 179
- JP-A- 2009 264 259
- US-A- 4 874 062

## Description

### Technical Field

The invention relates to a muffler arrangement for air ducts, in particular for clean air ducts of combustion engines.

### Prior Art

EP 2 249 020 A1 discloses a muffling structure of a vent pipe and a muffling structure of a case, which is capable of muffling sound in a wide frequency range and preventing vent resistance in the vent pipe or the case from deterioration. The vent pipe is a primary duct. The muffling structure includes vent holes formed in peripheral wall of the primary duct. A cover is so provided outside the peripheral wall as to cover the vent holes. Activated charcoal is contained in the cover, and a ventilative member is interposed between the activated charcoal and the peripheral wall. The vent holes are provided in the peripheral wall except the bottom thereof.

The JP H06 159174 A presents a resonator with an outer panel which extends in the circumferential and longitudinal directions respectively with the specified space from the outer circumferential surface of an intake tube which is provided on the outer circumference of the intake tube, a resonance chamber which extends in the circumferential and longitudinal directions respectively along the outer circumferential surface of the intake tube is formed by joining the total circumferential end of the outer panel with the intake tube, and a resonance tube which is projected into the resonance chamber is provided on the outer circumferential surface of the intake tube.

From US 4 874 062 A a muffler is known comprising a casing, a defining member for defining at least two resonance chambers in the casing, and a pipe for flowing a gas there through. Each of the resonance chambers has a different resonance frequency, and the pipe is communicated with each resonance chamber. Therefore, a plurality of noise frequencies can be suppressed.

The EP 1 433 948 A2 displays a noise attenuation device comprising a pipe section forming a section of the air inlet circuit of the turbocharger. It is fitted with a first group of external circumferential chambers located in parallel about the pipe and communicating with it through parallel openings around the pipe section. An additional chamber located in series with the first group of chambers communicates through an opening with the pipe section.

WO 2015/092488 A1 relates to a sound absorber that is used for attenuating the noise generated in the air conduits. It presents a resonator having compact size and low resistance that is used in vehicles for the aim of attenuating the noise in air intake conduits of the internal combustion engines.

The US 2011/011670 A discloses a muffling structure of a vent pipe and a muffling structure of a case, which is capable of muffling in a wide frequency range and preventing vent resistance in the air pipe or the case from deterioration. Vent holes are formed in the peripheral wall of the vent pipe, a cover is so provided on the peripheral wall of the vent pipe as to cover the vent holes, and a bag-like body in which activated charcoal is contained is disposed in the space formed by the peripheral wall of the vent pipe and the inner wall of the cover.

According to EP 2 249 020 A1 the muffling structure of a case is provided with a vent pipe for introduction purposes and a vent pipe for discharge purposes. The muffling structure includes an inner pipe that is disposed in the case and communicates with the introduction vent pipe or the discharge vent pipe. Vent holes are formed in a peripheral wall of the inner pipe. A cover is so provided outside the peripheral wall as to cover the vent holes, activated charcoal contained in the cover, and a ventilative member is interposed between the activated charcoal and the peripheral wall.

### Disclosure of the Invention

It is an object of the invention to provide a muffler arrangement for air ducts which is easy and cost saving in manufacturing and mounting, and which can particularly be used in various flexible applications for dirty air and clean air ducts.

This object is achieved by a muffler arrangement according to independent claim 1.

The other claims, the description and the drawings describe advantageous embodiments of the invention.

According to a first aspect of the invention a muffler arrangement is proposed, having at least an air duct and a resonator, wherein the resonator comprises at least a first shell and a second shell forming a housing around at least one resonator chamber. The air duct comprises at least an input duct, a central duct and an output duct. Openings are formed in a peripheral wall of the central duct, and the resonator is arranged around the peripheral wall of the central duct covering the openings and sealing against the surroundings.

The inventive solution describes a muffler arrangement with an integrated broad band resonator in air guiding ducts, particularly for engines, assembled in such a way that the resonator embraces the central duct without the need for further parts for assembling the muffler arrangement.

The inventive muffler arrangement avoids the disadvantages of current designs for air ducts with broad band resonators, which are based on multiple parts welded or fixed together during the assembly process. Conventional muffler arrangements include e.g. a flexible duct for engine movement decoupling, a broad band resonator of several parts welded together, a tight connection to the engine counterpart, and a central duct with acoustic openings connecting the guided air to the resonator chamber. The inventive muffler arrangement combines all these functions and parts into only a few parts. The main difference of the inventive muffler arrangement is that the guiding duct includes bellows, the acoustic openings, the tight connections in only one air duct, which is flexible and is manufactured from e.g. rubber or other thermoplastic elastomers (TPE) or other thermoplastic material (TP).

The tightness between the resonator and the main duct is achieved by definitive and/or non-definitive fixations.

The muffler arrangement may be extended to different embodiments. One configuration may be a main air duct made from rubber or TPE without an inner support from air conditioning to turbocharger or throttle body with an embracing broad band resonator. A second embodiment may be a main air duct made from rubber or TPE with an inner support from air conditioning to turbocharger or throttle body with an embracing broad band resonator. And a third embodiment could be a main duct as an input duct made from rubber or TPE connected to a central duct with an embracing broad band resonator and connected to a cuff as an output duct. The third embodiment exhibits the advantage of offering the possibility to combine different materials in the muffler arrangement, because main duct, central duct and cuff may be manufactured from different materials.

In a fourth embodiment the housing could look somewhat different. The housing comprises a first shell, which surrounds the central duct completely. The input duct is fed through the face of the first shell to the central duct. Downstream the housing comprises a second shell, which surrounds the central duct also completely. The output duct is fed through the face of the second shell to the central duct. The first shell and the second shell are sealed together according to the other embodiments by e.g. welding or an over-injection seam. Thus the central duct could carry some separation walls through which the tube like central duct could be fed and which support the second shell from an inside. These separation walls could serve for mechanical stabilization of the shells as well as for acoustically dividing the resonator chamber.

Thus the inventive solution allows to manufacture air ducts with broad band resonators integrated with much less parts than conventional designs. Less tools, less parts and therefore less processes are required.

The inventive muffler arrangement can be used for both dirty air side and clean air side, since a good tightness is achieved by the inventive design. The main duct is flexible, made e.g. of rubber or TPE.

With the described muffler arrangement acoustic openings, sealing ends and a decoupling function are integrated into only one flexible duct. The resonator shells, forming the housing around the resonator chamber do not have to be welded all around the air duct. The sealing between the first shell and the second shell is achieved by a sealing counterelement, being a sealing lip on the duct. As the two shells are pressed together in order to close the resonator and seal the two shells it is favorable to manufacture the shells from a harder material like polyamide (PA), particularly enforced by glass fibres, as PA GF 30 or the like.

According to a favorable embodiment the input duct, the central duct and the output duct may be formed by one integral part. As described above the air duct may comprise one main duct including all the functional elements of the air duct as are input duct, central duct and output duct according to the inventive solution. This embodiment offers the advantage of very cost effective manufacturing and mounting processes.

According to the invention the air duct is made of a flexible material. Such a flexible material may be rubber or TPE or another TP type. Flexible air ducts are advantageous in mounting situations in an engine compartment of a vehicle as spacious conditions are normally very limited there.

According to an advantageous embodiment the resonator may be configured as an acoustic broad band resonator. Contrarily to a resonator which can only function to muffle sound in a specific frequency range, as e.g. a Helmholtz-resonator, the inventive solution with a resonator embracing the air duct may act as a broad band resonator which is capable of muffling sound in a wide frequency range and preventing vent resistance in the air duct from deterioration.

According to the invention, for sealing of the resonator against the surroundings, a sealing counterelement is provided on the peripheral wall of the central duct for pressing sealing edges of the first shell and the second shell against the sealing counterelement. A major advantage of the inventive solution when using a flexible duct, is to reach air tightness if the resonator is used on the clean air side. When using a muffler arrangement with an air duct on clean air side tightness requirements to be fulfilled are usually below 1000 cc/min at working negative pressures between 0 kPa and -8 kPa relative pressure.

According to the invention, the sealing counterelement is a lip being an integral part of the central duct. The sealing lip may be manufactured with the peripheral wall of the central duct, thus being an integral part of the central duct and the lip is pressed by sealing edges of the first shell against sealing edges of the second shell as a sealing counterelement thus ensuring an effective tightness function of the resonator chamber against the surroundings. Additionally, sealing of the first shell and the second shell against the air duct may be performed by welding of the two shells together and with the sealing counterelement being integrated to the central duct as well as by an overinjection seam of the shells.

According to the invention, the resonator embraces the air duct, wherein sealing edges of the first shell and the second shell are accommodated in channels on the outside of the peripheral wall of the central duct. By this way the sealing function may be enhanced contrarily to a flat surface of the peripheral wall because the sealing edges are guided due to the channels in the peripheral wall. So the sealing function is additionally ensured.

In a favorable embodiment a support duct may be arranged within the central duct for mechanically supporting the central duct. This support duct may exhibit a stiffening function for the flexible air duct particularly if the air duct is manufactured from rubber or other elastomer. Thus the tight embracing of the air duct by the resonator shells is enforced and the sealing behavior additionally ensured. As the support duct has the function to support the peripheral walls of the central duct from inside it should be manufactured from a harder material in order to be able execute some force on the central duct. Thus stiffer materials as polyamide (PA) is favorable, particularly enforced by glass fibre, as PA6GF30, or the like. Alternatively the support duct may also be made of some sheet metal.

Advantageously supporting the central duct by the support duct may be achieved by pressing the peripheral wall of the central duct against sealing edges of the resonator. Due to the stiff character of the support duct it is possible to press the peripheral wall with a considerable force against the sealing edges of the resonator thus ensuring tightness of the sealing function.

In an advantageous embodiment the support duct may carry fixation edges on its outer circumference of at least one end of the support duct. With these fixation edges it is possible to fix the support duct within the central duct so that it cannot move even under vibration from an engine connected with. Further the fixation edges support additionally the sealing edges of the first shell and the second shell for a good tightness of the sealing function.

In a favorable embodiment at least two of the input duct, the central duct, the output duct may be formed by different materials. Thus it is possible to choose the material of the different duct parts according to their function. The input duct may be manufactured from a most flexible material, whereas the central duct may be made from a relatively stiff material for ensuring good tightness with the first shell and the second shell. The output duct may be made from a material with a moderate stiffness for e.g. enabling a good connection to the inlet of a turbocharger.

Favorably the resonator may provide a mechanical joining as well as a sealing function against the surroundings of the input duct, the central duct and the output duct. By this way the resonator housing, i.e. the first shell and the second shell may serve for different purposes. On one side they may guarantee the mechanical fixing of the different air duct parts and on the other side they may provide the sealing function of the different air duct parts and to the resonator chamber as a whole. Thus the resonator provides an integral function for the assembly of the muffler arrangement.

In an advantageous embodiment the input duct and/or the output duct may comprise a bellow. A bellow is particularly useful for serving as a decoupling element for reducing the influence of the movements from the engine due to its flexibility. Further it is useful for a flexible mounting capability under complex mounting situations under the hood of a vehicle in the surrounding of an engine.

According to another aspect of the invention a usage of a muffler arrangement is proposed for establishing a flexible, tight connection between an output of an air cleaner and an input of a turbo charger, in particular for clean air ducts of combustion engines. By using a flexible air duct all functions, as tight connections, acoustic function, decoupling function are covered by only one part. By using an elastomer duct, additional features may be added, like bellows, cuffs. This will give a significant advantage in terms of cost of the product.

### Brief Description of the Drawings

The present invention together with the above-mentioned and other objects and advantages may best be understood from the following detailed description of the embodiments, but not restricted to the embodiments, wherein is shown in:
- Figure 1: in an isometric view a first example embodiment of a muffler arrangement with an air duct and a broad band resonator according to the invention;
- Figure 2: in a cross cut view the central duct of the air duct embraced by the resonator shells according to the first embodiment of the invention shown in Fig. 1;
- Figure 3: in an isometric view the resonator of the muffler arrangement according to the first embodiment of the invention shown in Fig. 1;
- Figure 4: in an isometric view the air duct of the muffler arrangement according to the first embodiment of the invention shown in Fig. 1;
- Figure 5: in a longitudinal cut view the central duct of an air duct supported by a support duct and embraced by resonator shells according to a second embodiment of the invention;
- Figure 6: in a cut view a sealing structure between the shells of the resonator, the air duct and the support duct according to the second embodiment of the invention;
- Figure 7: in an isometric view the support duct according to the second embodiment of the invention shown in Fig. 5;
- Figure 8: in an isometric view a third embodiment of a muffler arrangement with three separate parts, input duct, central duct, output duct of the air duct according to the invention;
- Figure 9: in a cross cut view the central duct of the air duct embraced by the resonator shells according to the third embodiment of the invention shown in Fig. 8;
- Figure 10: in an isometric view the output duct of the muffler arrangement according to the third embodiment of the invention shown in Fig. 8;
- Figure 11: in an isometric view the central duct of the muffler arrangement according to the third embodiment of the invention shown in Fig. 8;
- Figure 12: in an isometric view the input duct of the muffler arrangement according to the third embodiment of the invention shown in Fig. 8;
- Figure 13: in an isometric view a fourth embodiment of a muffler arrangement with a different housing according to the invention;
- Figure 14: in an isometric view the fourth embodiment according to the invention of Figure 13, the resonator depicted in a partly exploded view;
- Figure 15: in a longitudinal cut view the fourth embodiment of Figure 13; and
- Figure 16: in an isometric view the central duct of the fourth embodiment of Figure 13.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

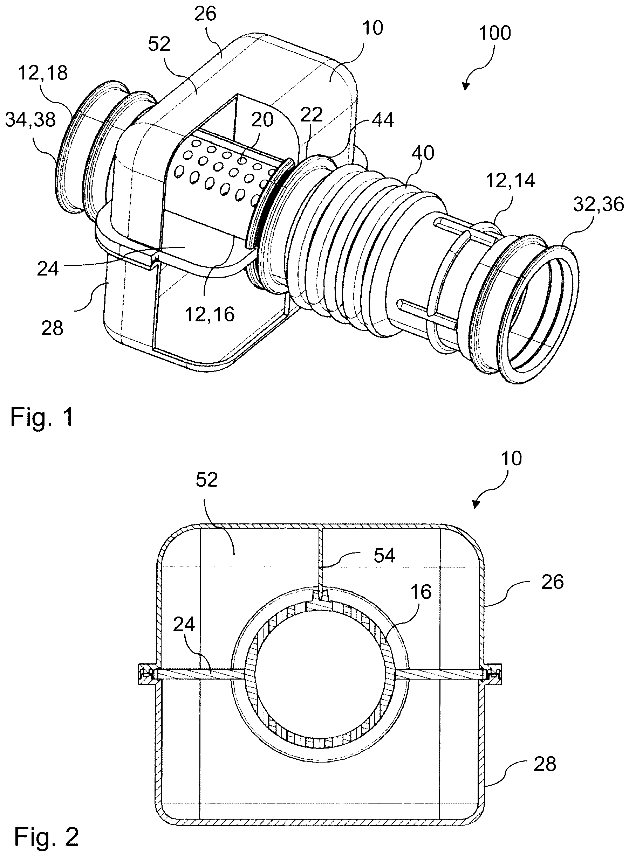

Figure 1 shows in an isometric view a first example embodiment of a muffler arrangement 100 with an air duct 12 and a broad band resonator 10 according to the invention. The muffler arrangement 100 is intended for establishing a flexible, tight connection between an output of an air cleaner and an input of a turbo charger, in particular for clean air ducts of combustion engines.

The central duct 16, whether rubber, TPE or TP, includes along its routing: connections to both counter parts, the input duct 14 and the output duct 18, a bellow 40 as a flexible element for movement decoupling and acoustic openings 20. Both first shell 26 (shown by way of example as upper shell in the drawing) and second shell 28 (shown by way of example as lower shell in the drawing) of the resonator 10 embrace the central duct 16, with its sealing edges 44 fitting in special channels 22 that ensures both tightness and correct alignment. Sealing counterelements 24 on the central duct 16 are used both as volume splitters for the resonator chamber 52, and as sealing between the two shells 26, 28. The details hereto are shown in the following Figures 2 to 4.

The resonator 10 comprises a first shell 26 and a second shell 28 forming a housing around a resonator chamber 52. The air duct 12 comprises an input duct 14, a central duct 16, being inside the resonator chamber 52, and an output duct 18. Openings 20 are formed in a peripheral wall 42 of the central duct 16, also inside the resonator chamber 52. The resonator 10 is arranged around the peripheral wall 42 of the central duct 16 covering the openings 20 and sealing against the surroundings. Thus the first shell 26 and the second shell 28, being part of the resonator 10, embrace the central duct 16 and are tightly sealed. The input duct 14, the central duct 16 and the output duct 18 are formed by one integral part of the air duct 12. The air duct 12 exhibits a connection 32 to the clean air side 36 as well as a connection 34 to the side 38 of a turbo charger or a throttle body. The air duct 12 is made of a flexible material like rubber or TPE or other TP material in order to support the functions mechanical decoupling from the movements of an engine and ensuring sealing tightness.

The resonator 10 is configured as an acoustic broad band resonator. For sealing of the resonator 10 against the surroundings a sealing counterelement 24 is provided on the peripheral wall 42 of the central duct 16 for pressing sealing edges 44 of the first shell 26 and the second shell 28 against the sealing counterelement 24. The sealing counterelement 24 is a lip being an integral part of the central duct 16.

In all embodiments shown both shells 26, 28 are held together by means of welding or by an over-injected seam. The sealing counterelement 24 is supporting the sealing function, so that both shells 26. 28 could also be clipped together. For airtight sealing a welding or an over-injection seam are preferable.

Figure 2 depicts in a cross cut view the central duct 16 of the air duct 12 embraced by the resonator shells 26, 28 according to the first embodiment of the invention shown in Fig. 1. In the cross section the central duct 16 is to be seen carrying on both sides the sealing counterelement 24, which closes the sealing of the first shell 26 against the second shell 28 when pressed together. Additionally the first shell 26 and the second shell 28 may be sealed by welding or an over-injection seam. First shell 26 and second shell 28 together form the resonator chamber 52. The first shell 26 of the resonator 10 is additionally reinforced by a separation wall 54. Additionally the separation wall 54 serves for dividing the resonator chamber 52 due to acoustic reasons.

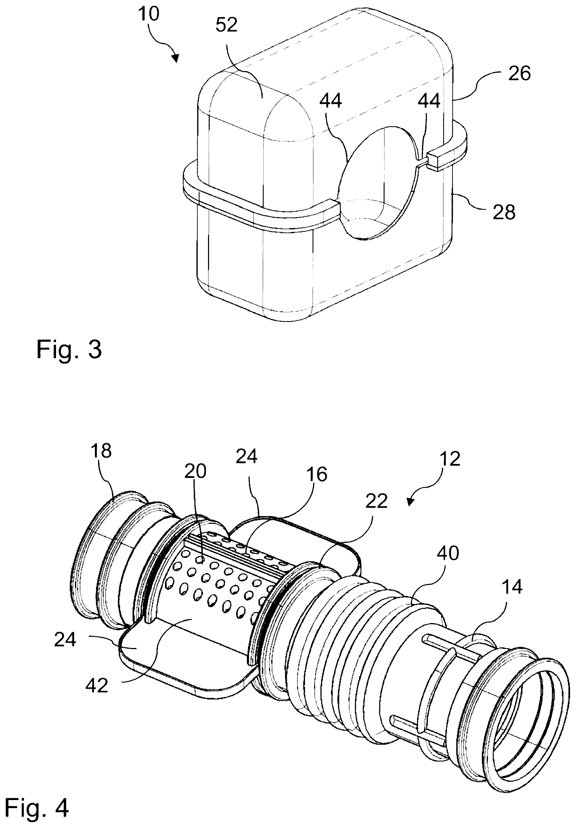

In Figure 3 the resonator 10 of the muffler arrangement 100 according to the first embodiment of the invention shown in Fig. 1 is depicted in an isometric view. Both shells 26, 28 are fit together. The sealing edges 44 for sealing the two shells 26, 28 together as well as to the air duct 12 are indicated.

Figure 4 shows in an isometric view the air duct 12 of the muffler arrangement 100 according to the first embodiment of the invention shown in Fig. 1. The air duct 12 comprises as an integral part the input duct 14 with a bellow 40 for mechanical decoupling, joined to the central part 16, exhibiting acoustic openings 20 in its peripheral wall 42. The central duct 16 also carries the sealing counterelements 24 for sealing the two shells 26, 28 of the resonator 10 together. Also to be seen are channels 22 for sealing the shells 26, 28 against the air duct 12. The resonator 10 embraces the air duct 12 wherein sealing edges 44 of the first shell 26 and the second shell 28 are accommodated in the channels 22 on the outside of the peripheral wall 42 of the central duct 16.

The central duct 16 is joined to the output duct 18 on the other end of the air duct 12. The air duct 12 may be made from rubber or TPE or another thermoelastomer material.

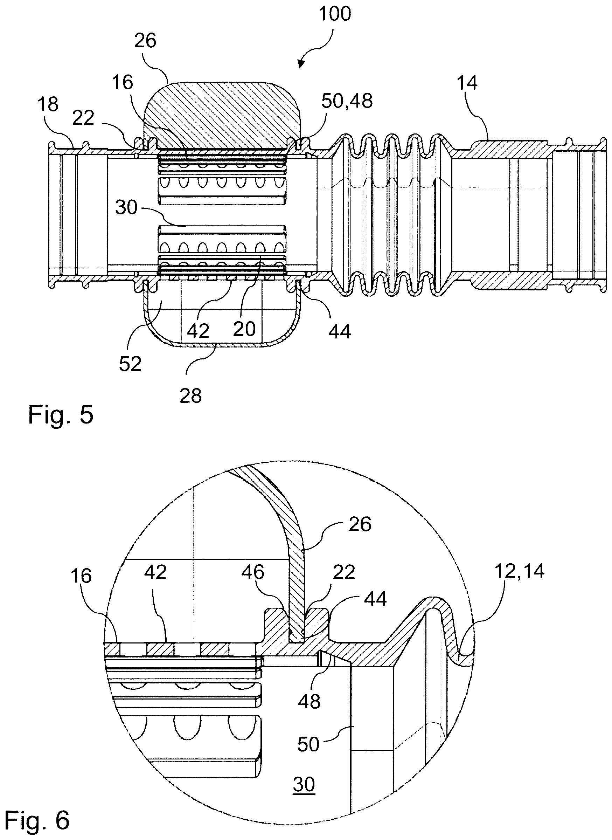

Figure 5 depicts in a longitudinal cut view the central duct 16 of an air duct 12 supported by a support duct 30 and embraced by resonator shells 26, 28 according to a second embodiment of the invention. A support plastic or metal duct (cage-shape) 30 is introduced into the central duct 16 to support assembly pressure from the two shells 26, 28 of the resonator 10.

The support duct 30 is arranged within the central duct 16 for mechanically supporting the central duct 16. Supporting the central duct 16 by the support duct 30 is achieved by pressing the peripheral wall 42 of the central duct 16 against sealing edges 44 of the resonator 10. A fixation edge 48 is formed at the circumference of the end of the support duct 30, explaining its function in Figure 6.

Figure 6 depicts in a cut view a sealing structure 46 between the shells 26, 28 of the resonator 10, the air duct 12 and the support duct 30 according to the second embodiment of the invention. The support duct 30 carries fixation edges 48 on its outer circumference of at least one end 50 of the support duct 30. The fixation edges 48 are pressed against the inner wall of the air duct 12, either in the central duct 16 or in the input duct 14 or the output duct 18. The sealing edges 44 of the shells 26, 28 (in Figure 6 the first shell 26) are pressed in the channels 22 formed in the air duct 12, where on the second side the support duct 30 is pressed against the peripheral wall 42 of the central duct 16. The position of the support duct 30 is ensured by the fixation edges 48 pressing against the air duct 12. Also channels could be foreseen in the inner wall of the air duct 12 to accommodate the fixation edges 48.

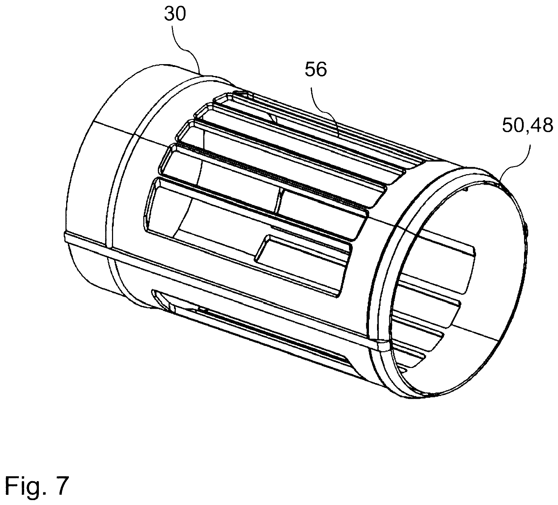

In Figure 7 an isometric view of the support duct 30 according to the second embodiment of the invention shown in Fig. 5 is shown. The support duct 30 is formed tube like with partial side walls and fixation edges 48 on its outer circumference of at least one end 50 of the support duct 30. The support duct 30 exhibits e.g. slots 56 on the circumference of the tube like body for feed through of air to the openings 20 of the central duct 16.

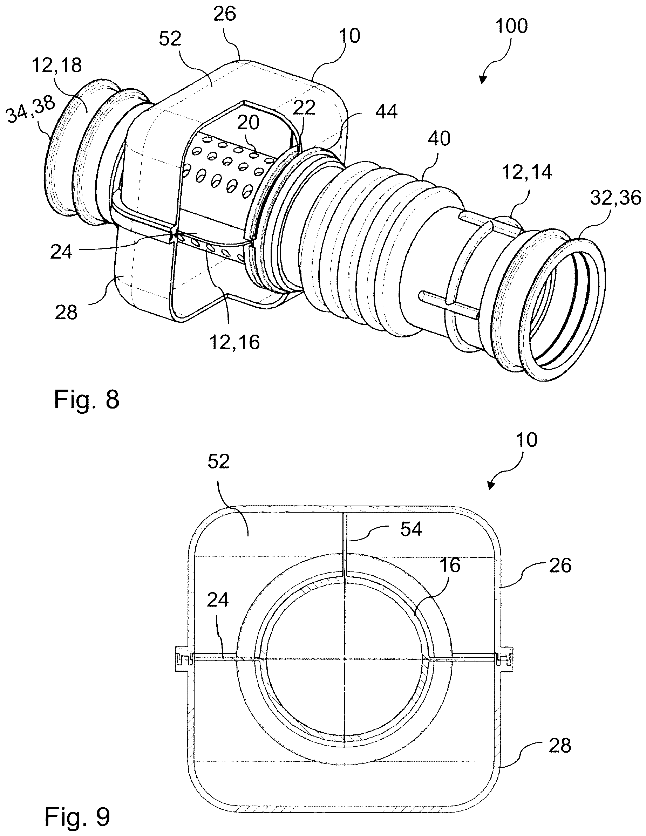

Figure 8 depicts in an isometric view a third embodiment of a muffler arrangement 100 with three separate parts, input duct 14, central duct 16, output duct 18 of the air duct 12 according to the invention. In this case, the central duct 16 is split into three parts: a bellow duct as an input duct 14, an inner acoustic rigid duct as a central duct 16, and a cuff as an output duct 18. This configuration allows to use different materials: temperature resistant materials for cuff connection to high temperature counterparts (i.e. turbochargers, EGR valves) and lower cost materials for bellows and acoustic duct. The sealing concept is similar to the embodiment shown in Figure 5. Sealing is directly achieved by means of a tight welding or an over-injection seam between the shells 26, 28.

In the third embodiment of Figure 8 the input duct 14, the central duct 16, the output duct 18 are formed by different materials, according to different requirements concerning stiffness or sealing behavior or connection conditions. The resonator 10 may provide in this case a mechanical joining as well as a sealing function against the surroundings of the input duct 14, the central duct 16 and the output duct 18.

In Figure 9 in a cross cut view the central duct 16 of the air duct 12 embraced by the resonator shells 26, 28 according to the third embodiment of the invention shown in Fig. 8, is depicted. In the cross section the central duct 16 is to be seen carrying on both sides the sealing counterelement 24, which closes the sealing of the first shell 26 against the second shell 28 when pressed together. First shell 26 and second shell 28 together form the resonator chamber 52. The first shell 26 of the resonator 10 is additionally reinforced by a separation wall 54 as well as acoustically divided.

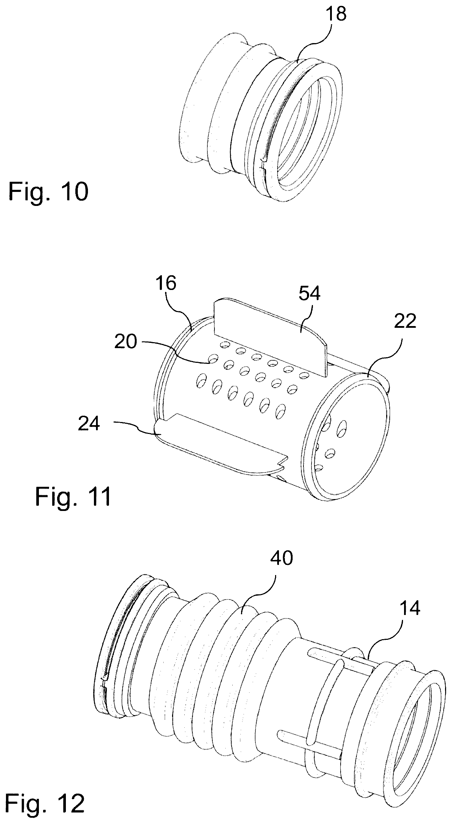

Figure 10 shows in an isometric view the output duct 18 of the muffler arrangement 100 according to the third embodiment of the invention shown in Fig. 8. Figure 11 depicts in an isometric view the central duct 16 of the muffler arrangement 100 according to the third embodiment of the invention shown in Fig. 8, and in Figure 12 the input duct 14 of the muffler arrangement 100 according to the third embodiment of the invention shown in Fig. 8 is shown in an isometric view. The input duct 14 is comprising a bellow 40. Alternatively the output duct 18 could also comprise a bellow 40.

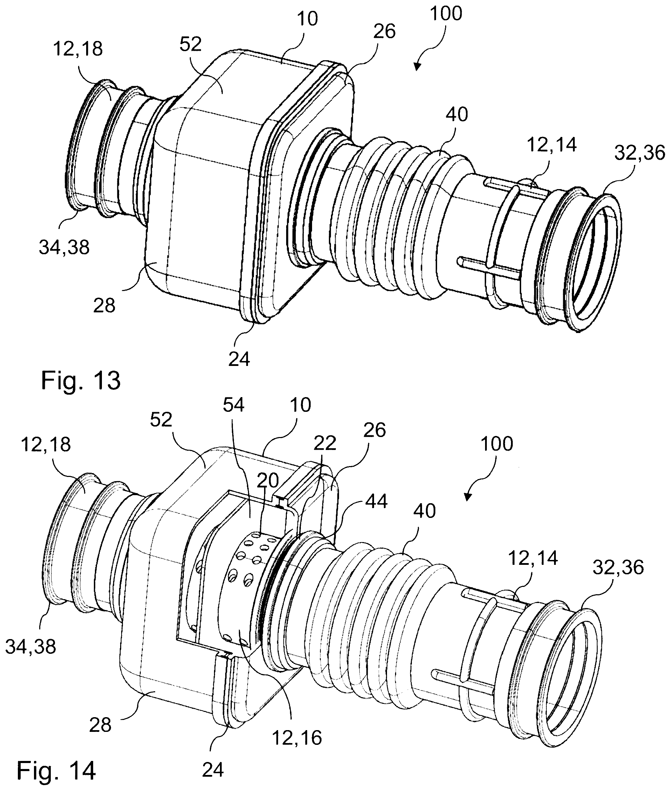

Figure 13 depicts in an isometric view a fourth embodiment of a muffler arrangement 100 with a different housing according to the invention. Principally the fourth embodiment is designed like the other embodiments. Yet the housing looks somewhat different. The housing comprises a first shell 26, which surrounds the central duct 16. The input duct 14 is fed through the face of the first shell 26 to the central duct 16. Downstream the housing comprises a second shell 28, which surrounds the central duct 16 also completely. The output duct 16 is also fed through the face of the second shell 28 to the central duct 16.The first shell 26 and the second shell 28 are sealed together according to the method for the other embodiments by welding or an overinjection seam.

Figure 14 depicts in an isometric view the fourth embodiment according to the invention of Figure 13, the resonator 52 depicted in a partly exploded view. As can be seen the central duct 16 carries more than one separation wall 54 for mechanical stabilization of the housing and for acoustic reasons. The sealing of the first shell 26 against the air duct 12 is performed in an analogous way as for the other embodiments by the channel 22 in the central duct 16 and the sealing edge 44 of the first shell 26. In this case the sealing edge 44 forms a circle solely in the first shell 26. In a similar way the sealing of the second shell 28 against the air duct 12 may be achieved.

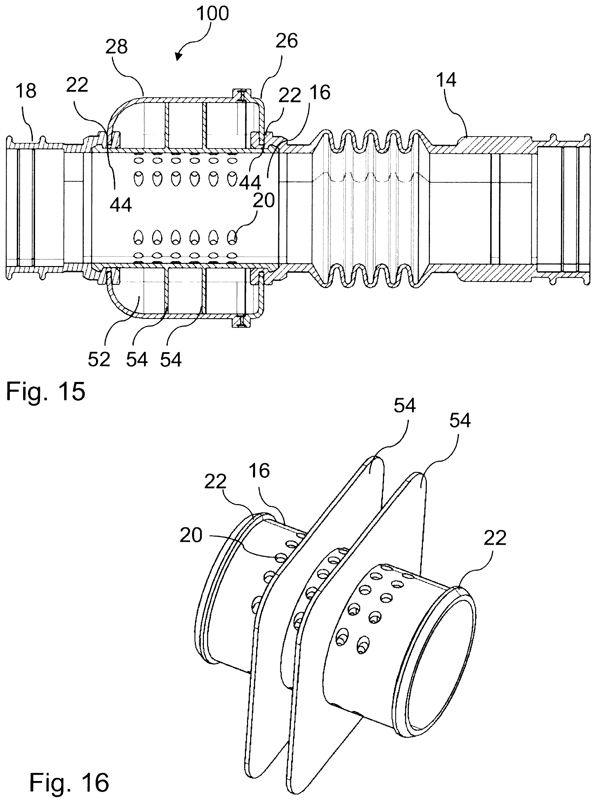

In Figure 15 a longitudinal cut view the fourth embodiment of Figure 13 is shown. In this view the two separation walls 54 integrated in the central duct 16 are indicated. The design of the air duct 12 looks quite similar to the design of the first embodiment. Also the sealing concept of the air duct 12 against the first shell 26 and the second shell 28 with the channels 22 and the sealing edges 44 is to be seen in the cut view.

Figure 16 depicts in an isometric view the central duct 16 of the fourth embodiment of Figure 13. The central duct 16 is formed tube like and carries openings 20 in its peripheral wall 42. The central duct 16 exhibits channels 22 at both ends for sealing against the first shell 26 and the second shell 28. It furthers carries two separation walls 54 for mechanical stabilization of the second shell 28 from an inside as well as for acoustically dividing the volume of the resonator chamber 52. The tube of the central duct 16 is fed through the surfaces of the separation walls 54.

## Claims

1. A muffler arrangement (100) having at least an air duct (12) and a resonator (10), wherein
(i) the resonator (10) comprises at least a first shell (26) and a second shell (28) forming a housing around at least one resonator chamber (52),
(ii) the air duct (12) comprises at least an input duct (14), a central duct (16) and an output duct (18),
(iii) openings (20) are formed in a peripheral wall (42) of the central duct (16), and
(iv) the resonator (10) is arranged around the peripheral wall (42) of the central duct (16) covering the openings (20) and sealing against the surroundings,
wherein the air duct (12) is made of a flexible material, manufactured from rubber or other thermoplastic elastomers (TPE) or other thermoplastic material (TP), **characterized in that** for sealing of the resonator (10) against the surroundings, a sealing counterelement (24) is provided on the peripheral wall (42) of the central duct (16) for pressing sealing edges (44) of the first shell (26) and the second shell (28) against the sealing counterelement (24), wherein the sealing counterelement (24) is a lip being an integral part of the central duct (16), wherein the resonator (10) embraces the air duct (12), wherein sealing edges (44) of the first shell (26) and the second shell (28) are accommodated in channels (22) on the outside of the peripheral wall (42) of the central duct (16).

2. The muffler arrangement according to claim 1, wherein the input duct (14), the central duct (16) and the output duct (18) are formed by one integral part.

3. The muffler arrangement according to any one of the preceding claims, wherein the resonator (10) is configured as an acoustic broad band resonator.

4. The muffler arrangement according to any one of the preceding claims, wherein a support duct (30) is arranged within the central duct (16) for mechanically supporting the central duct (16).

5. The muffler arrangement according to claim 4, wherein supporting the central duct (16) by the support duct (30) is achieved by pressing the peripheral wall (42) of the central duct (16) against sealing edges (44) of the resonator (10).

6. The muffler arrangement according to claim 4 or 5, wherein the support duct (30) carries fixation edges (48) on its outer circumference of at least one end (50) of the support duct (30).

7. The muffler arrangement according to any one of the preceding claims, wherein at least two of the input duct (14), the central duct (16), the output duct (18) are formed by different materials.

8. The muffler arrangement according to claim 7, wherein the resonator (10) provides a mechanical joining as well as a sealing function against the surroundings of the input duct (14), the central duct (16) and the output duct (18).

9. The muffler arrangement according to any one of the preceding claims, wherein the input duct (14) and/or the output duct (18) are comprising a bellow (40).

10. A usage of a muffler arrangement (100) according to any one of the claims 1 to 9, for establishing a flexible, tight connection between an output of an air cleaner and an input of a turbo charger, in particular for clean air ducts of combustion engines.

11. A clean air duct device, particular for an internal combustion engine, comprising at least one muffler arrangement according to one of the claims 1 to 9.

## Patentansprüche

1. Schalldämpferanordnung (100) mit mindestens einem Luftkanal (12) und einem Resonator (10), wobei
(i) der Resonator (10) mindestens eine erste Schale (26) und eine zweite Schale (28) umfasst, welche ein Gehäuse um die mindestens eine Resonatorkammer (52) bilden,
(ii) der Luftkanal (12) mindestens einen Einlasskanal (14), einen Zentralkanal (16) und einen Auslasskanal (18) umfasst,
(iii) Öffnungen (20) in einer Umfangswand (42) des Zentralkanals (16) gebildet sind, und
(iv) der Resonator (10) um die Umfangswand (42) des Zentralkanals (16) herum angeordnet ist, der die Öffnungen (20) abdeckt und gegen die Umgebung abdichtet,
wobei der Luftkanal (12) aus einem flexiblen Material besteht, das aus Gummi oder aus anderen thermoplastischen Elastomeren (TPE) oder aus einem anderen thermoplastischen Material (TP) hergestellt ist, **dadurch gekennzeichnet, dass** zum Abdichten des Resonators (10) gegen die Umgebung ein Abdichtungsgegenelement (24) an der Umfangswand (42) des Zentralkanals (16) vorgesehen ist, um Dichtkanten (44) der ersten Schale (26) und der zweiten Schale (28) gegen das Abdichtungsgegenelement (24) zu drücken, wobei das Abdichtungsgegenelement (24) eine Lippe ist, die ein integraler Bestandteil des Zentralkanals (16) ist, wobei der Resonator (10) den Luftkanal (12) umschließt, wobei Dichtkanten (44) der ersten Schale (26) und der zweiten Schale (28) in Kanälen (22) an der Außenseite der Umfangswand (42) des Zentralkanals (16) untergebracht sind.

2. Schalldämpferanordnung nach Anspruch 1, wobei der Einlasskanal (14) der Zentralkanal (16) und der Auslasskanal (18) durch ein integrales Bestandteil gebildet sind.

3. Schalldämpferanordnung nach einem der obigen Ansprüche, wobei der Resonator (10) als akustischer Breitbandresonator ausgelegt ist.

4. Schalldämpferanordnung nach einem der obigen Ansprüche, wobei ein Stützkanal (30) in dem Zentralkanal (16) zum mechanischen Abstützen des Zentralkanals (16) angeordnet ist.

5. Schalldämpferanordnung nach Anspruch 4, wobei das Abstützen des Zentralkanals (16) durch den Stützkanal (30) durch Andrücken der Umfangswand (42) des Zentralkanals (16) gegen Dichtkanten (44) des Resonators (10) erreicht wird.

6. Schalldämpferanordnung nach Anspruch 4 oder 5, wobei der Stützkanal (30) an seinem Außenumfang von mindestens einem Ende (50) des Stützkanals (30) Befestigungskanten (48) aufweist.

7. Schalldämpferanordnung nach einem der obigen Ansprüche, wobei mindestens zwei von Einlasskanal (14), Zentralkanal (16), Auslasskanal (18) aus unterschiedlichen Materialien geformt sind.

8. Schalldämpferanordnung nach Anspruch 7, wobei der Resonator (10) ein mechanisches Fügen sowie eine Dichtfunktion gegen die Umgebung von Einlasskanal (14), Zentralkanal (16) und Auslasskanal (18) vorsieht.

9. Schalldämpferanordnung nach einem der obigen Ansprüche, wobei der Einlasskanal (14) und/oder der Auslasskanal (18) einen Faltenbalg (40) umfassen.

10. Verwendung einer Schalldämpferanordnung (100) nach einem der Ansprüche 1 bis 9 zum Herstellen einer flexiblen, engen Verbindung zwischen einem Ausgang eines Luftfilters und einem Eingang eines Turboladers, insbesondere für saubere Luftkanäle von Verbrennungsmotoren.

11. Reinluftleitungsvorrichtung, insbesondere für eine Brennkraftmaschine, umfassend mindestens eine Schalldämpferanordnung nach einem der Ansprüche 1 bis 9.

## Revendications

1. Agencement de silencieux (100) ayant au moins un conduit d'air (12) et un résonateur (10), dans lequel
(i) le résonateur (10) comprend au moins une première coque (26) et une seconde coque (28) formant un boîtier autour d'au moins une chambre de résonance (52),
(ii) le conduit d'air (12) comprend au moins un conduit d'entrée (14), un conduit central (16) et un conduit de sortie (18),
(iii) des ouvertures (20) sont formées dans une paroi périphérique (42) du conduit central (16), et
(iv) le résonateur (10) est disposé autour de la paroi périphérique (42) du conduit central (16) couvrant les ouvertures (20) et assurant une étanchéité vis-à-vis de l'environnement,
dans lequel le conduit d'air (12) est constitué d'un matériau flexible, fabriqué à partir de caoutchouc ou d'autres élastomères thermoplastiques (TPE) ou d'un autre matériau thermoplastique (TP), **caractérisé en ce que**, pour l'étanchéité du résonateur (10) vis-à-vis de l'environnement, un élément complémentaire d'étanchéité (24) est fourni sur la paroi périphérique (42) du conduit central (16) pour presser des bords d'étanchéité (44) de la première coque (26) et de la seconde coque (28) contre l'élément complémentaire d'étanchéité (24), dans lequel l'élément complémentaire d'étanchéité (24) est une lèvre faisant partie intégrante du conduit central (16), dans lequel le résonateur (10) englobe le conduit d'air (12), dans lequel des bords d'étanchéité (44) de la première coque (26) et de la seconde coque (28) sont logés dans des canaux (22) sur l'extérieur de la paroi périphérique (42) du conduit central (16).

2. Agencement de silencieux selon la revendication 1, dans lequel le conduit d'entrée (14), le conduit central (16) et le conduit de sortie (18) sont formés d'une partie monobloc.

3. Agencement de silencieux selon l'une quelconque des revendications précédentes, dans lequel le résonateur (10) est configuré en tant que résonateur acoustique à large bande.

4. Agencement de silencieux selon l'une quelconque des revendications précédentes, dans lequel un conduit de support (30) est disposé au sein du conduit central (16) pour supporter mécaniquement le conduit central (16).

5. Agencement de silencieux selon la revendication 4, dans lequel le support du conduit central (16) par le conduit de support (30) est réalisé en pressant la paroi périphérique (42) du conduit central (16) contre les bords d'étanchéité (44) du résonateur (10).

6. Agencement de silencieux selon la revendication 4 ou 5, dans lequel le conduit de support (30) comporte des bords de fixation (48) sur sa circonférence externe d'au moins une extrémité (50) du conduit de support (30).

7. Agencement de silencieux selon l'une quelconque des revendications précédentes, dans lequel au moins deux parmi le conduit d'entrée (14), le conduit central (16), le conduit de sortie (18) sont formés de matériaux différents.

8. Agencement de silencieux selon la revendication 7, dans lequel le résonateur (10) fournit un assemblage mécanique ainsi qu'une fonction d'étanchéité vis-à-vis de l'environnement du conduit d'entrée (14), du conduit central (16) et du conduit de sortie (18).

9. Agencement de silencieux selon l'une quelconque des revendications précédentes, dans lequel le conduit d'entrée (14) et/ou le conduit de sortie (18) comprennent un soufflet (40).

10. Utilisation d'un agencement de silencieux (100) selon l'une quelconque des revendications 1 à 9, pour établir un raccordement flexible et hermétique entre une sortie d'un épurateur d'air et une entrée d'un turbocompresseur, notamment pour des conduits d'air propre de moteurs à combustion.

11. Dispositif de conduit d'air propre, destiné notamment à un moteur à combustion interne, comprenant au moins un agencement de silencieux selon l'une des revendications 1 à 9.
